**Europäisches Patentamt**

(19) **European Patent Office**

**Office européen des brevets**

(11) Veröffentlichungsnummer: **0 042 514**
**B1**

(12) # EUROPÄISCHE PATENTSCHRIFT

(45) Veröffentlichungstag der Patentschrift:
29.05.85

(51) Int. Cl.⁴: **G 02 F 1/29, G 02 B 6/12**

(21) Anmeldenummer: **81104278.7**

(22) Anmeldetag: **03.06.81**

(54) Planare Wellenleiterlinse, ihre Verwendung und Verfahren zu ihrer Herstellung.

(30) Priorität: **20.06.80 DE 3023147**

(43) Veröffentlichungstag der Anmeldung:
**30.12.81 Patentblatt 81/52**

(45) Bekanntmachung des Hinweises auf die Patenterteilung:
**29.05.85 Patentblatt 85/22**

(84) Benannte Vertragsstaaten:
**DE FR GB**

(56) Entgegenhaltungen:
**DE - B - 2 131 450**
**US - A - 4 124 281**

**Patents Abstracts of Japan, Band 2, Nr. 102, 23. August 1978, Seite 5214E78**
**IEEE SPECTRUM, Band 15, Nr. 12, Dezember 1978, New York, D.B. ANDERSON "Integrated optical spectrum analyzer: An imminent 'Chip'", Seiten 22 bis 29**
**MACHINE DESIGN, Band 51, Nr. 28, 1979, Cleveland, L. TESCHLER "The promise of integrated optics", Seiten 143 bis 149**

(73) Patentinhaber: **Siemens Aktiengesellschaft, Berlin und München Wittelsbacherplatz 2, D-8000 München 2 (DE)**

(72) Erfinder: **Keil, Rudolf, Dipl.-Ing., Reschreiterstrasse 12, D-8000 München 45 (DE)**
Erfinder: **Auracher, Franz, Dr., Eichenstrasse 26, D-8021 Baierbrunn (DE)**
Erfinder: **Stockmann, Michael, Dipl.-Phys., Plievierpark 10, D-8000 München 83 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine planare Wellenleiterlinse nach dem Oberbegriff des Anspruchs 1, ihre Verwendung und ihre Herstellung.

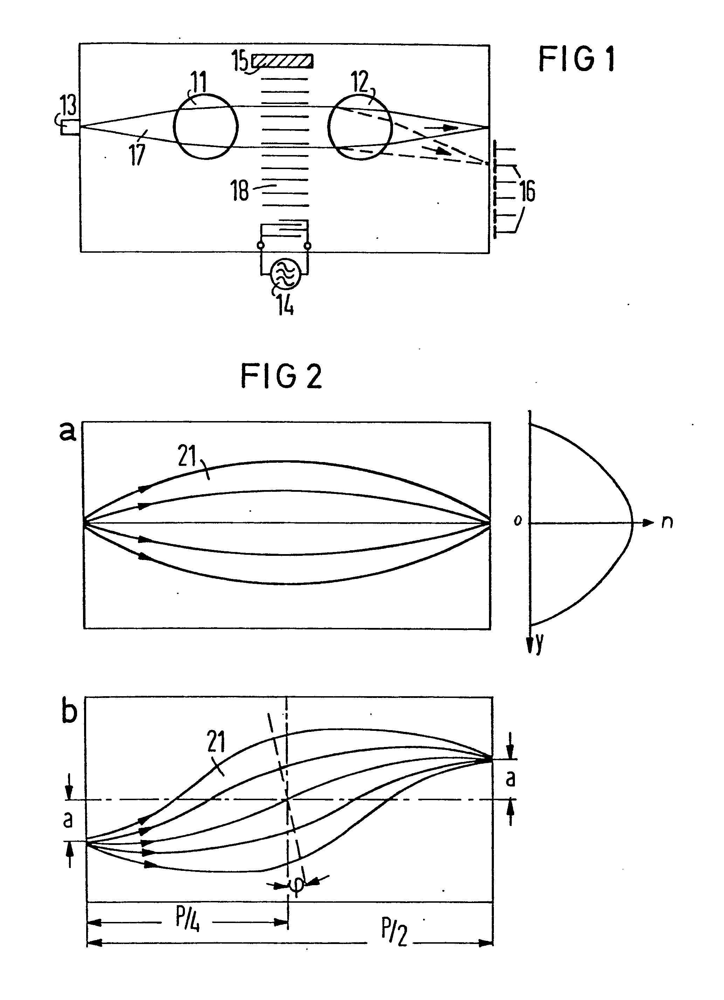

Für viele planare optische Bauelemente werden Linsen in Wellenleiterausführung benötigt. Ein repräsentatives Beispiel ist ein integriertoptischer Spektralanalysator, wie er von D.B. Anderson et al in IEEE, Journ. of Quantum Electronics, QE-13 (1977), auf den Seiten 268 bis 275 beschrieben wird. Fig. 1 zeigt einen solchen integriert-optischen Spektralanalysator mit zwei Wellenleiterlinsen. Hier muß das von einer Laserdiode in den optischen Schichtwellenleiter eingekoppelte Licht mit einer ersten Linse kollimiert werden; das kollimierte Licht wird dann durch Wechselwirkung mit einer akustischen Oberflächenwelle abgelenkt und mittels einer zweiten Linse (Fourier-Linse) wieder auf eine Detektorzeile fokussiert. Ein Wandler wandelt eine angelegte Wechselspannung in die akustische Oberflächenwelle um, die wiederum von einem Absorber absorbiert wird. Da der Ablenkwinkel des Lichtes proportional der Frequenz der akustischen Oberflächenwelle ist, ist die Verschiebung des Brennflecks auf der Detektorzeile ebenfalls proportional der akustischen Frequenz. Der Frequenzanalysator stellt aber nur eines von vielen optischen Bauelementen dar, bei denen Wellenleiterlinsen benötigt werden.

Bisher wurden geodätische (B. Chen and O.G. Ramer: IEEE, Journ. of Quantum Electronics, QE-15 (1979), Seiten 853 bis 860), Luneburg-(F. Zernike: Opt. Commun.12 (1974), Seiten 379 bis 381) und Gitterlinsen (S.K. Yao and D.E. Thompson: Appl. Phys. Letters 33 (1978), Seiten 635 bis 637) als Wellenleiterlinsen erprobt. Luneburg-Linsen sind zwar relativ leicht herzustellen, eignen sich aber nicht für Substrate mit hohem Brechungsindex, wie sie häufig benötigt werden. Sie scheiden daher z. B. für elektrooptische Substrate wie $LiNbO_3$ oder $LiTaO_3$ aus. Gitterlinsen und geodätische Linsen sind auch für hochbrechende Substrate geeignet, jedoch treten bei Gitterlinsen starke Abbildungsfehler bei schrägem Einfall des Lichtes zur optischen Achse auf. Geodätische Linsen haben den Nachteil, daß ihre reproduzierbare Herstellung und ihre genaue Positionierung in bezug auf andere Komponenten des planaren optischen Bauelementes (z. B. der Detektorzeile im Frequenzanalysator) sehr schwierig ist.

Eine planare Wellenleiterlinse, bei der das Brechzahlprofil quer zur Linsenachse etwa parabelförmig verläuft, ist aus einem Artikel von Y. Suematsu et al, Focussing Properties of Thin-Film Lenslike Light Guide for Integrated Optics«, Appl. Physics Letters, Vol. 23, No. 2, 78–79 (1973) bekannt.

Andererseits ist aus IEEE Spectrum, Bd. 15, No. 12, Dez. 1978, 22–29 ein Artikel von D.P. Anderson bekannt, in dem die Verwendung von beispielsweise akustooptischen Einrichtungen zur Ablenkung von Licht auf verschiedene Auftreffpunkte in der integrierten Optik beschrieben ist. Der in Fig. 2 dieser Veröffentlichung angegebene Spektralanalysator entspricht genau demjenigen Spektralanalysator, wie er in Fig. 1 der vorliegenden Patentbeschreibung angegeben worden ist. Obwohl der Verfasser Anderson in dieser zuletzt genannten Veröffentlichung die mögliche Verwendung von Lithium-Niobat ($LiNbO_3$) als mögliches Substrat für einen Spektralanalysator angibt, vermag er keinen funktionsfähigen Spektralanalysator mit einem Substrat aus Lithium-Niobat anzugeben, weil die in seiner Fig. 2 in der zuletzt genannten Veröffentlichung verwendeten Luneburg-Linsen für Substrate mit hohem Brechungsindex nicht geeignet sind. Da Anderson wußte, daß eine Verwendung von Lithium-Niobat als Substrat Probleme mit sich bringt, gibt er als Alternativen zur Luneburg-Linse geodätische und Gitterlinsen an. Bei diesen Linsen treten jedoch die obengenannten Nachteile auf.

Der vorliegenden Erfindung liegt die Aufgabe zugrunde, eine planare Wellenleiterlinse der eingangs genannten Art anzugeben, die die Realisierung zahlreicher neuartiger optischer Bauelemente mit günstigen Abbildungseigenschaften in einfacher Weise ermöglicht.

Diese Aufgabe wird erfindungsgemäß durch eine planare Wellenleiterlinse nach einem der Ansprüche 1, 10, 11, 13 gelöst.

Bei Ankopplung einer planaren Gradientenlinse an Multimode-Fasern ist es zweckmäßig, daß diese planare Gradientenlinse in der Raumrichtung senkrecht zur Linsenachse und senkrecht zu der Achse, in der die angegebene Änderung des Brechzahlprofils verläuft, mehrmodig ist; ansonsten sind stets einmodige vorzuziehen.

Die günstigen Abbildungseigenschaften der planaren Gradientenlinse ermöglichen die Realisierung zahlreicher neuartiger Ausbildungen der Erfindung, die in den Ansprüchen 1 bis 13 beschrieben sind und in den Ausführungsbeispielen der Erfindung näher erläutert werden.

Die Verwendung der erfindungsgemäßen Ausbildungen für zahlreiche neuartige planare optische Bauelemente wird in den Ansprüchen 14 bis 21 beschrieben und ebenfalls in den Ausführungsbeispielen der Erfindung näher erläutert.

Die Herstellung der planaren Gradientenlinse ist ähnlich der Herstellung von Luneburg-Linsen durch Verfahren möglich, die in den Ansprüchen 22 bis einschließlich 25 angegeben sind. Darüber hinaus kann das gewünschte Brechzahlprofil beispielsweise durch Aufsputtern oder Aufdampfen einer Metallschicht, die ein entsprechendes Dickenprofil aufweist, erzielt werden. Weiterhin kann das gewünschte Brechzahlprofil durch Ionenimplantation mit variabler Dosis erreicht werden.

Das in den Ansprüchen angegebene, etwa parabelförmige Profil des effektiven Brechsindex der Wellenleiterlinse muß sehr genau eingehalten werden. Eine ähnliche Änderung des Brechzahlprofils bewirkt lediglich eine Änderung der Brennweite, Abweichungen von der angegebenen Form des Profils ergeben jedoch Bildfehler, die sich besonders bei großem Öffnungsverhältnis stark auswirken. Da unterschiedliche Moden in einem Schichtwellenleiter auch unterschiedliche effektive Brechungsindizes haben, ergeben sich für die verschiedenen Moden unterschiedliche Brennweiten.

Abbildungseigenschaften und Ausführungsbeispiele der Erfindung sind in Zeichnungen dargestellt und werden im folgenden näher beschrieben:

Fig. 1 zeigt einen integriert-optischen Spektralanalysator mit zwei Wellenleiterlinsen nach dem Stand der Technik;

Fig. 2 zeigt eine planare Gradientenlinse, und zwar

a) bei axialer Lichteinkopplung,
b) bei außeraxialer Lichteinkopplung;

Fig. 3 zeigt einen integriert-optischen Spektralanalysator mit planarer Gradientenlinse;

Fig. 4 zeigt einen Faserumschalter mit elektrooptischem Bragg-Ablenker;

Fig. 5 zeigt einen akustooptischen Faserumschalter, und zwar

a) für Monomodefasern,
b) für Multimodefasern;

Fig. 6 zeigt einen Datenumsetzer (Parallel auf Serie) mit elektrooptischem Prismenablenker;

Fig. 7 zeigt ein Fasergyroskop mit festem 3 db-Teiler;

Fig. 8 zeigt einen schaltbaren Abzweig für Fasern;

Fig. 9 zeigt einen wellenlängenselektiven Strahlteiler;

Fig. 10 zeigt eine planare Gradientenlinse mit konstantem Brechungsindexverlauf im mittleren Bereich;

Fig. 11 zeigt ein Bauelement zur Signalerkennung.

Fig. 2a zeigt den Strahlengang bei axialer Lichteinkopplung, Fig. 2b zeigt den Strahlengang bei außeraxialer Lichteinkopplung. Außerdem wird bei Fig. 2a der qualitative Brechungsindexverlauf der planaren Gradientenlinse gezeigt. Strahlen, die von einem Punkt auf der Eingangsseite der Linse ausgehen, verlaufen etwa sinusförmig um die Linsenachse mit einer Periode p (mit p ist die Periode des Strahlenverlaufs bezeichnet) unabhängig vom Neigungswinkel des Strahls am Eintrittsort. Strahlen, die von einem Punkt auf der Achse ausgehen, verlaufen nach einer Entfernung p/4 achsparallel und werden im Abstand p/2 wieder auf der Achse fokussiert (Fig. 2a). Wird die Linse außerhalb der Achse punktförmig angeregt, dann verlaufen die Strahlen im Abstand p/4 von der Einkoppelstelle zwar parallel, aber um einen Winkel $\varphi$ geneigt zur Achse, nach p/2 werden sie wieder im gleichen Achsabstand a von der Achse abgebildet (Fig. 2b).

Ein parabelförmiges Brechzahlprofil ergibt für größere Akzeptanzwinkel Abbildungsfehler. Wird dagegen die planare Gradientenlinse so ausgeführt, daß das Brechzahlprofil quer zur Linsenachse sich wie

$$n(y) = \frac{n_0}{\cosh(y/f)}$$

verhält, wobei folgende Bezeichnungen gelten:

y: Abstand von der Linsenachse quer zu dieser Linsenachse,
$n_0$ = n (y = 0): effektiver Brechungsindex für y = 0,
f: Brennweite der Linse,

dann treten auch für beliebige Akzeptanzwinkel keine Abbildungsfehler auf (A.L. Mikaélyan: Soviet Journal of Quantum Electronics 7 (1977), Seiten 266 bis 267). Ein Vorteil dieser Ausführungsform ist, daß selbst die bei geodätischen und Luneburg-Linsen vorhandene Bildfeldkrümmung entfällt.

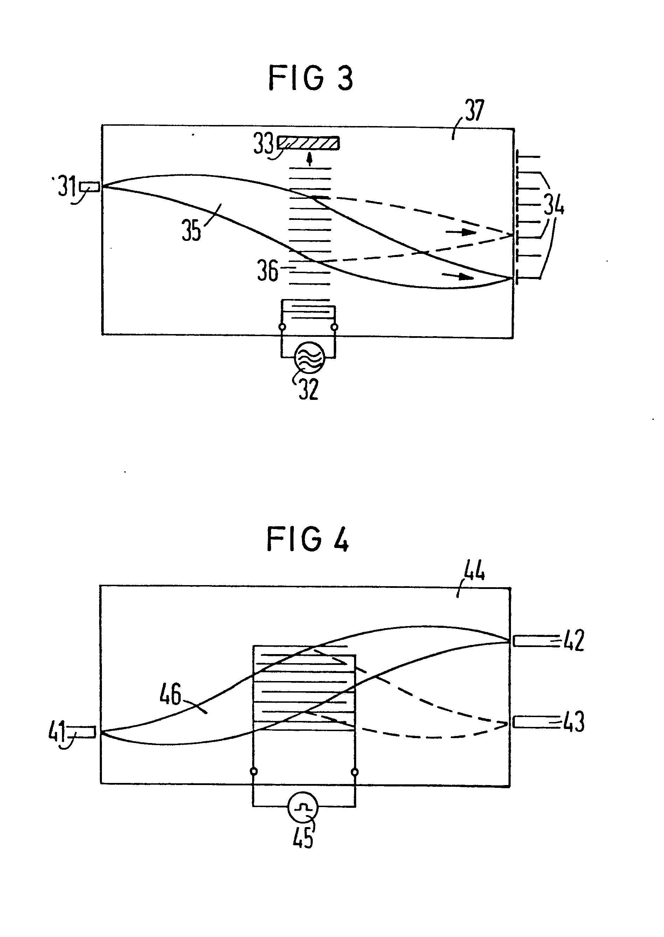

In Fig. 3 ist ein Frequenzanalysator dargestellt, bei dem die zwei in der herkömmlichen Ausführung nach Fig. 1 erforderlichen Wellenleiterlinsen 11, 12 durch eine einzige Gradientenlinse 37 ersetzt sind. Dadurch wird das Problem vermieden, zwei Linsen herstellen zu müssen, die in bezug auf die anderen Komponenten des Spektralanalysators genau positioniert sein müssen. Außerdem tritt bei diesem Linsentyp keine Bildfeldwölbung auf, was für die Ankopplung der Detektorzeile 34 günstig ist. Im übrigen ist die Funktionsweise dieses Spektralanalysators analog zu der Funktionsweise des in Fig. 1 gezeigten Spektralanalysators: Das von einer Laserdiode 31 in den optischen Schichtwellenleiter eingekoppelte Licht 35 wird von der Gradientenlinse 37 kollimiert, dann wird es durch Wechselwirkung mit der vom Wandler 32 ausgehenden und auf den Absorber 33 zulaufenden akustischen Oberflächenwelle 36 abgelenkt und schließlich wiederum mittels der Gradientenlinse 37 auf die Detektorzeile 34 fokussiert. Die Verschiebung des Brennflecks auf der Detektorzeile 34 ist ein Maß für die akustische Frequenz.

Fig. 4 zeigt einen Faserumschalter mit elektrooptischem Bragg-Ablenker. Die Gradientenlinse 44 wird z. B. durch Eindiffusion von Titan in einen $LiNbO_3$-Kristall hergestellt. Über eine Einrichtung mit fingerförmigen Elektroden 45 kann durch Anlegen einer Spannung ein Brechzahlgitter induziert werden, an dem das von einer Einkoppelfaser 41 in den optischen Schichtwellenleiter eingekoppelte Licht 46 Bragg-reflektiert wird. Die Gradientenlinse 44 fokussiert dann das reflektierte Licht auf die Faser 43. Ohne angelegte Spannung wird das Licht 46 auf die Faser 42 fokussiert.

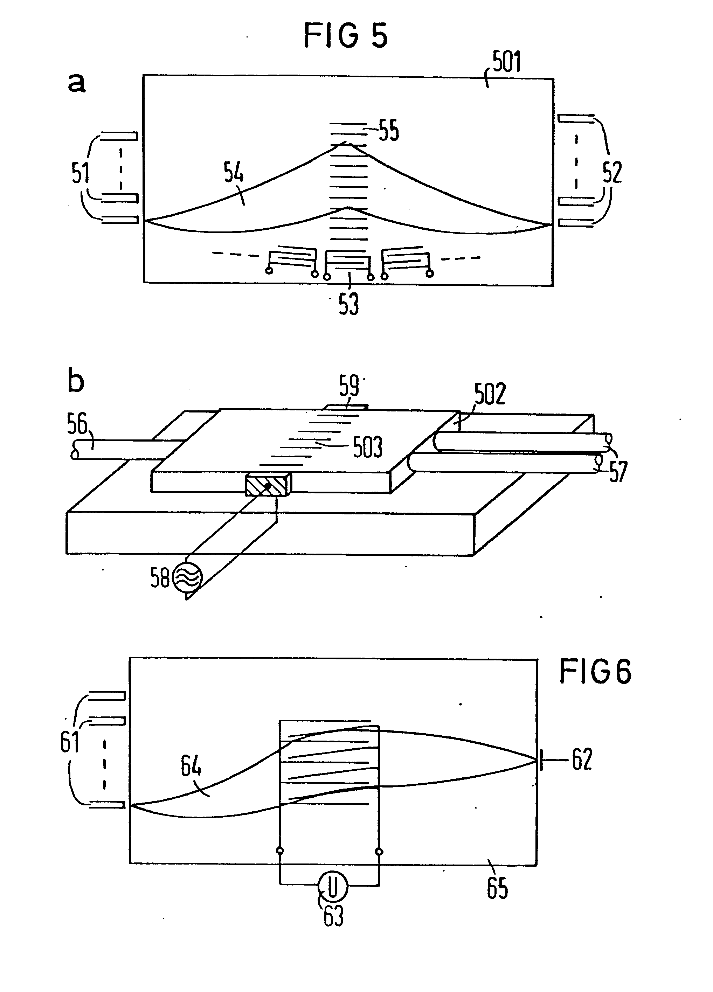

Fig. 5 zeigt Faserumschalter, bei denen das Brechzahlgitter akustooptisch erzeugt wird.

Durch Ändern der Frequenz kann man dann wahlweise auf eine der Auskoppelfasern 52, 57 umschalten.

Fig. 5a) zeigt einen akustooptischen Faserumschalter für Monomodefasern. Sollen an das Bauelement Monomodefasern angekoppelt werden, dann verwendet man eine akustische Oberflächenwelle 55. Das von einer der Einkoppelfasern 51 in den optischen Schichtwellenleiter eingekoppelte Licht 54 wird zunächst von der Gradientenlinse 501 kollimiert, wird dann durch Wechselwirkung mit der mittels der Schallwandler 53 erzeugten akustischen Oberflächenwelle 55 in der gewünschten Form abgelenkt und schließlich von der Gradientenlinse 501 auf eine der Auskoppelfasern 52 fokussiert.

Fig. 5b zeigt einen akustooptischen Faserumschalter für Multimodefasern. Das von der Einkoppelfaser 56 in den mehrmodigen optischen Wellenleiter 502 eingekoppelte Licht wird zunächst von der Gradientenlinse 502 kollimiert, tritt dann mit einer vom Schallwandler 58 hervorgerufenen akustischen Volumenwelle 503 in Wechselwirkung und wird dann von der Gradientenlinse 502 auf eine der Auskoppelfasern 57 fokussiert. Durch die Wahl der Frequenz der auf den Absorber 59 zulaufenden akustischen Volumenwelle 503 wird festgelegt, auf welche der Auskoppelfasern 57 das Licht fokussiert wird.

Fig. 6 zeigt einen Datenumsetzer mit elektrooptischem Prismenablenker 63, bei dem die Daten von Parallel auf Serie umgesetzt werden. Wahlweise kann man jeweils einen von N Eingängen auf einen Ausgang abbilden. Das von einer der Einkoppelfasern 61 in den optischen Schichtwellenleiter 65 eingekoppelte Licht 64 wird von der Gradientenlinse 65 kollimiert, wird dann durch mittels des Prismenablenkers 63 elektrooptisch induzierte, prismenförmige Ablenkbereiche abgelenkt und schließlich von der Gradientenlinse 65 auf den Detektor 62 fokussiert.

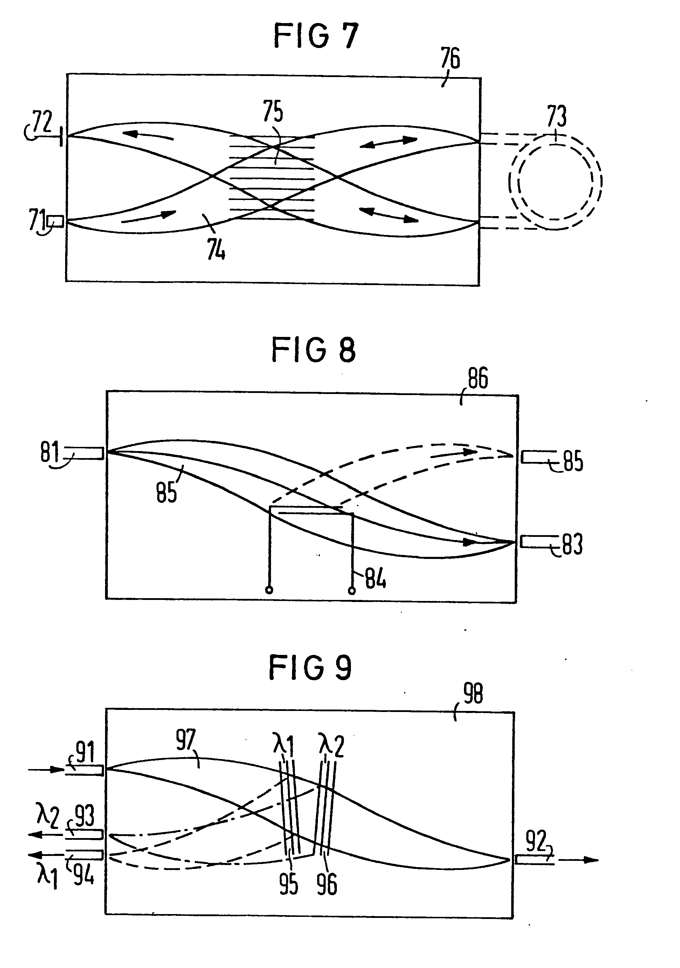

Fig. 7 zeigt ein Fasergyroskop (G. Schiffner: Siemens Forschungs- und Entwicklungsberichte 9 (1980), Seiten 16 bis 25) mit festem 3 dB-Teiler. Das von der Laserdiode 71 in den optischen Schichtwellenleiter 76 eingekoppelte Licht 74 wird zunächst von der Gradientenlinse 76 kollimiert, sodann wird es an der permanenten Gitterstruktur 75, die als fester 3 dB-Teiler wirkt, aufgeteilt. Nach anschließender Fokussierung der Teilstrahlen durch die Gradientenlinse 76 durchlaufen die Teilstrahlen eine Faserspule 73. Von der Faserspule 73 zurückkommenden Teilstrahlen werden schließlich am Detektor 72 empfangen. Je nach Länge und Modulationstiefe der gitterförmigen Struktur 75 erhält man eine feste (nicht steuerbare) Aufteilung des Lichts auf die Ausgangswellenleiter.

Fig. 8 zeigt eine alternative Ausführung für einen schaltbaren Abzweig in einem elektrooptischen Substrat. Das von einer Einkoppelfaser 81 in den optischen Schichtwellenleiter 86 eingekoppelte Licht 85 wird, wenn durch Anlegen einer Spannung an die Elektroden 84 ein Brechzahlsprung induziert ist, ganz oder teilweise reflektiert. Das reflektierte Licht wird auf den Ausgang 82 abgebildet. Ist an den Elektroden 84 keine Spannung angelegt, so wird das Licht 85 vollständig auf den Ausgang 83 abgebildet.

Fig. 9 zeigt eine weitere Ausführungsform mit einem festen (nicht schaltbaren) Reflexionsgitter. Da das Reflexionsvermögen eines Gitters von der Wellenlänge des Lichts abhängt, lassen sich mit dieser Anordnung auch wellenlängenselektive Abzweige herstellen. Durch Anordnen mehrerer zueinander geneigter Gitter 95, 96 mit unterschiedlichen Gitterkonstanten hintereinander können mehrere Wellenlängen auf unterschiedliche Stellen 93, 94 der Eingangsseite fokussiert werden. Das von einer Einkoppelfaser 91 in den Schichtwellenleiter 98 eingekoppelte Licht 97 wird auf diese Weise an den Gitterstrukturen 95 und 96 aufgeteilt. In Abhängigkeit von der Wellenlänge werden Teilstrahlen auf die Ausgänge 93 und 94 abgebildet, der Rest des Lichts wird auf den Ausgang 92 abgebildet.

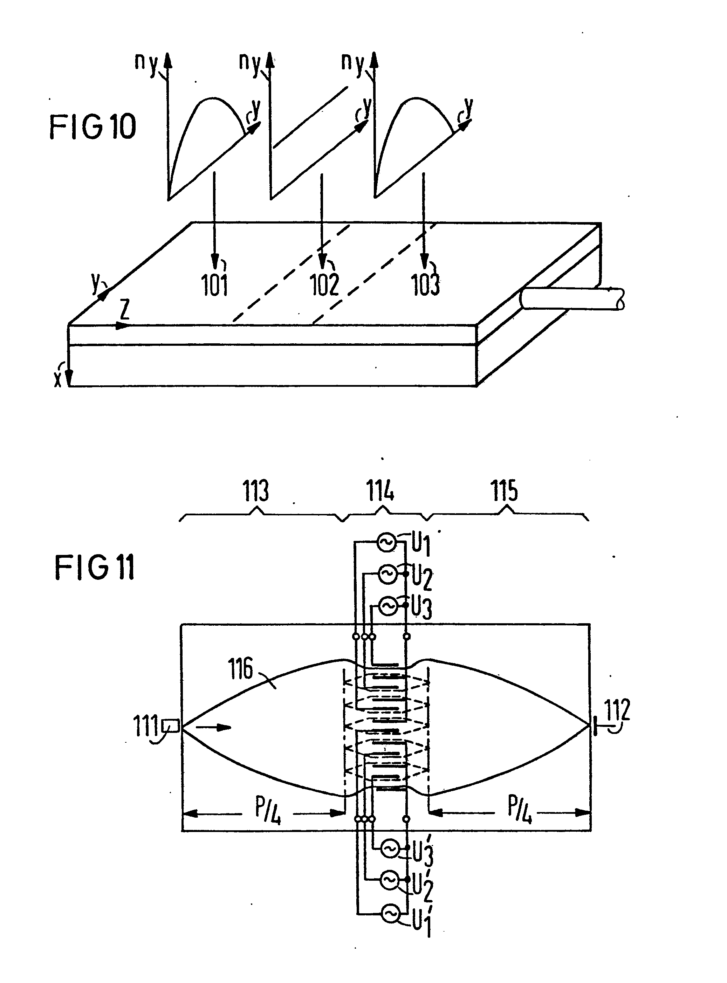

Fig. 10 zeigt eine planare Gradientenlinse mit konstantem Brechungsindexverlauf im mittleren Bereich 102, während die Bereiche 101 und 103 den etwa parabelförmigen Brechungsindexverlauf aufweisen. Um bei einer planaren Gradientenlinse genügend Platz für die Gitterstrukturen zu haben, ohne die Abbildungseigenschaften der Gradientenlinse zu verschlechtern, kann im Bereich der Gitterstruktur ein Wellenleiterbereich 102 mit konstantem Brechungsindex hergestellt werden.

Fig. 11 zeigt ein elektrooptisches Bauelement, das z. B. zur Signalerkennung dienen kann (C.M. Verber: Laser Focus, Dez. 1979, Seiten 68 bis 69). Das z. B. von einem Laser 111 ausgehende Licht 116 wird im Gradientenlinsenbereich 113 kollimiert und im Bereich 114 über taperförmige Übergänge, die in einer dem Fachmann bekannten Weise ausgeführt sind, auf $2 \times N$ Streifenwellenleiter konzentriert. Über Elektroden können nun in den Streifenwellenleitern 1 bis N Phasenverschiebungen der optischen Welle entsprechend einem Referenzsignal hervorgerufen werden. Werden an die Elektroden 1' bis N' Spannungen entsprechend dem zu analysierenden Signal gelegt, so treten in den Wellenleitern 1' bis N' entsprechende Phasenverschiebungen der optischen Welle auf. Nun können alle bekannten Referenzsignale zeitlich nacheinander an die Elektroden 1 bis N angelegt werden. Die phasenverschobenen Teilwellen des Lichts werden über sich aufweitende Taper und den Gradientenlinsenbereich 115 in der Detektorebene überlagert und zur Interferenz gebracht. Stimmt das Referenzsignal mit dem unbekannten Signal überein, ergibt sich eine maximale Ausgangsintensität am Detektor 112 (konstruktive Interferenz). Zweckmäßigerweise wird man jedoch in den Wellenleitern 1 bis N für das Referenzsignal eine zusätzliche Phasenverschiebung von $\pi/2$ vorsehen, so daß sich bei Übereinstimmung des unbekannten Signals mit dem Referenzsignal ein Minimum am Detektorausgang 112 ergibt.

Derartige Bauelemente können z. B auch zur automatischen Lageerkennung einer Maske in Bezug auf das Substrat (mit Hilfe von Justiermarken) verwendet werden. Da N Signale gleichzeitig verglichen werden können, ergibt sich eine sehr schnelle Verarbeitung der Signale.

**Patentansprüche**

1. Planare Wellenleiterlinse, bei der das Brechzahlprofil quer zur Linsenachse etwa parabelförmig verläuft, gekennzeichnet durch wenigstens eine Gitterstruktur im Bereich des im wesentlichen kollimierten Strahlenganges zur Aufteilung oder Ablenkung oder Reflexion von wenigstens einem die Linse durchsetzenden Lichtbündel.

2. Planare Wellenleiterlinse nach Anspruch 1, dadurch gekennzeichnet, daß die Gitterstruktur oder die Gitterstrukturen permanent sind.

3. Planare Wellenleiterlinse nach Anspruch 2, dadurch gekennzeichnet, daß die Gitterstruktur eine gitterförmige Oberflächenstruktur des Wellenleiters ist.

4. Planare Wellenleiterlinse nach Anspruch 2, gekennzeichnet durch ein eindiffundiertes gitterförmiges Brechzahlprofil.

5. Planare Wellenleiterlinse nach Anspruch 2, gekennzeichnet durch ein ionenimplantiertes gitterförmiges Brechzahlprofil.

6. Planare Wellenleiterlinse nach Anspruch 1, gekennzeichnet durch Einrichtungen, die die Gitterstruktur oder die Gitterstrukturen elektrooptisch erzeugen.

7. Planare Wellenleiterlinse nach Anspruch 1, gekennzeichnet durch Einrichtungen, die die Gitterstruktur oder die Gitterstrukturen akustooptisch erzeugen.

8. Planare Wellenleiterlinse nach Anspruch 7, dadurch gekennzeichnet, daß bei Ankopplung von Monomode-Fasern die Gitterstruktur oder Gitterstrukturen über akustische Oberflächenwellen erzeugt werden.

9. Planare Wellenleiterlinse nach Anspruch 7, dadurch gekennzeichnet, daß bei Ankopplung von Multimode-Fasern die Gitterstruktur oder Gitterstrukturen über akustische Volumenwellen erzeugt werden.

10. Planare Wellenleiterlinse, bei der das Brechzahlprofil quer zur Linsenachse etwa parabelförmig verläuft, gekennzeichnet durch elektrooptisch induzierte prismenförmige Ablenkbereiche im Bereich des im wesentlichen kollimierten Strahlenganges zur Ablenkung von wenigstens einem die Linse durchsetzenden Lichtbündel.

11. Planare Wellenleiterlinse, bei der das Brechzahlprofil quer zur Linsenachse etwa parabelförmig verläuft, dadurch gekennzeichnet, daß das Substrat ein elektrooptisches Substrat ist, wobei über Elektroden in einem Teil der planaren Wellenleiterlinse im Bereich des im wesentlichen kollimierten Strahlenganges ein Brechzahlsprung induziert werden kann, an dem dann wenigstens ein die Linse durchsetzendes Lichtbündel bzw. ein Teil wenigstens eines die Linse durchsetzenden Lichtbündels total reflektiert wird.

12. Planare Wellenleiterlinse nach einem der Ansprüche 1 bis 11, dadurch gekennzeichnet, daß im Bereich der Gitterstrukturen bzw. der prismenförmigen Ablenkbereiche bzw. des induzierbaren Brechzahlsprungs ein Wellenleiterabschnitt mit konstantem Brechungsindex ausgebildet ist.

13. Planare Wellenleiterlinse, bei der das Brechzahlprofil quer zur Linsenachse etwa parabelförmig verläuft, dadurch gekennzeichnet, daß das Substrat ein elektrooptisches Substrat ist, wobei in der Mitte des Linsenkörpers ein Wellenleiterbereich mit $2 \times N$ Streifenwellenleitern, die konstanten Brechungsindex aufweisen und die symmetrisch bezüglich der Linsenachse angeordnet sind, quer zur Linsenachse ausgebildet ist, wobei sämtliche $2 \times N$ Streifenwellenleiter über taperförmige Übergänge an die beiderseits anschließenden gleich großen Wellenleiterlinsenbereiche, bei denen das Brechzahlprofil quer zur Linsenachse etwa parabelförmig verläuft, optisch angeschlossen sind und wobei an sämtlichen dieser $2 \times N$ Streifenwellenleiter Elektroden zur elektrooptischen Beeinflussung des Lichtes angeordnet sind.

14. Verwendung der planaren Wellenleiterlinse nach Anspruch 13 zur Signalerkennung, dadurch gekennzeichnet, daß in N Streifenwellenleitern Phasenverschiebungen des von einem Laser ausgehenden Lichtes entsprechend einem zu analysierenden Signal und in den anderen N Streifenwellenleitern Phasenverschiebungen entsprechend einem Referenzsignal oder einer Reihe von Referenzsignalen in zeitlicher Abfolge hervorgerufen werden, wobei die Interferenz der phasenverschobenen Teilwellen an einem Detektor überprüft wird.

15. Verwendung der planaren Wellenleiterlinse nach Anspruch 13 zur automatischen Lageerkennung einer Maske in bezug auf das Substrat mit Hilfe von Justiermarken.

16. Verwendung der planaren Wellenleiterlinse nach einem der Ansprüche 1 bis 12 als Frequenzanalysator oder als Abzweig oder als wellenlängenselektiven Abzweig oder als wellenlängenselektiven Verteiler oder als schaltbaren Abzweig oder als schaltbaren Verteiler oder als schaltbaren wellenlängenselektiven Abzweig oder als schaltbaren wellenlängenselektiven Verteiler.

17. Verwendung der planaren Wellenleiterlinse nach Anspruch 6 als schaltbaren Abzweig, dadurch gekennzeichnet, daß die Ablenkung des Lichtes über eine elektrooptische Bragg-Ablenkung erfolgt.

18. Verwendung der planaren Wellenleiterlinse nach Anspruch 2 als 3 dB-Koppler (Strahlteiler) für ein Fasergyroskop.

19. Verwendung der planaren Wellenleiterlinse nach einem der Ansprüche 1 bis 12 für einen Datenumsetzer.

20. Verwendung der planaren Wellenleiterlinse nach Anspruch 19, dadurch gekennzeichnet, daß die Daten von Parallel auf Serie umgesetzt werden.

21. Verwendung der planaren Wellenleiterlinse nach Anspruch 19, dadurch gekennzeichnet, daß die Daten von Serie auf Parallel umgesetzt werden.

22. Verfahren zur Herstellung der planaren Wellenleiterlinse nach einem der Ansprüche 1, 10, 11, 13, dadurch gekennzeichnet, daß das gewünschte Brechzahlprofil durch Eindiffusion einer Metallschicht (z. B. Titan), die ein entsprechendes Dickenprofil aufweist, in das Substrat (z. B. LiNbO₃ oder LiTaO₃) erreicht wird.

23. Verfahren zur Herstellung der planaren Wellenleiterlinse nach Anspruch 22, dadurch gekennzeichnet, daß das Dickenprofil durch eine entsprechend geformte Schattenmaske oder durch eine variable, zeitlich gesteuerte Blende festgelegt wird.

24. Verfahren zur Herstellung der planaren Wellenleiterlinse nach einem der Ansprüche 1, 10, 11, 13, dadurch gekennzeichnet, daß die planare Wellenleiterlinse aus einer üblichen, rotationsymmetrischen Gradientenlinse, bei der sich das Brechverhalten über den Durchmesser hinweg entsprechend verhält, herausgeschnitten wird, wobei die Achse der rotationssymmetrischen Gradientenlinse parallel zur Linsenachse der planaren Wellenleiterlinse ist.

25. Verfahren zur Herstellung der planaren Wellenleiterlinse nach Anspruch 24, dadurch gekennzeichnet, daß die herausgeschnittene planare Wellenleiterlinse mit einem niedriger brechenden Mantelmaterial umgeben wird.

**Claims**

1. A planar waveguide lens, wherein the refractive index profile is approximately parabolic transverse to the lens axis, characterised by at least one grid structure in the region of the essentially collimated light path for the division, diffraction or reflection of at least one light beam which travels through the lens.

2. A planar waveguide lens as claimed in Claim 1, characterised in that the grid structure or structures are permanent.

3. A planar waveguide lens as claimed in Claim 2, characterised in that the grid structure is a grid-shaped surface structure of the waveguide.

4. A planar waveguide lens as claimed in Claim 2, characterised by a diffused grid-shaped refractive index profile.

5. A planar waveguide lens as claimed in Claim 2, characterised by an ion-implanted grid-shaped refractive index profile.

6. A planar waveguide lens as claimed in Claim 1, characterised by devices which produce the grid structure or structures electro-optically.

7. A planar waveguide lens as claimed in Claim 1, characterised by devices which produce the grid structure or structures acousto-optically.

8. A planar waveguide lens as claimed in Claim 7, characterised in that when connecting monomode fibres the grid structure or structures are produced by acoustic surface waves.

9. A planar waveguide lens as claimed in Claim 7, characterised in that when connecting multimode fibres the grid structure or structures are produced by volume waves.

10. A planar waveguide lens, wherein the refractive index profile is approximately parabolic transverse to the lens axis, characterised by electro-optically induced prism-shaped deflecting regions in the region of the essentially collimated light path for the deflection of at least one light beam which passes through the lens.

11. A planar waveguide lens, wherein the refractive index profile is approximately parabolic transverse to the lens axis, characterised in that the substrate is an electro-optical substrate in which electrodes can induce a refractive index jump in a section of the planar waveguide lens in the region of the essentially collimated light path, on which at least one light beam which passes through the lens, or at least part of one light beam which passes through the lens, as the case may be, is then totally reflected.

12. A planar waveguide lens as claimed in one of Claims 1 to 11, characterised in that a waveguide section having a constant refractive index is formed in the region of the grid structures or of the prism-shaped deflecting regions or of the inducible refractive index.

13. A planar waveguide lens, wherein the refractive index profile is approximately parabolic transverse to the lens axis, characterised in that the substrate is an electro-optical substrate, where there is formed in the centre of the lens body a waveguide region with $2 \times N$ strip waveguides transverse to the lens axis, which have a constant refractive index and are symmetrically arranged with respect to the lens axis, where all $2 \times N$ strip waveguides are optically connected via tapered junctions to the waveguide lens regions which adjoin on both sides and are of the same size and in which the refractive index profile is approximately parabolic transverse to the lens axis, and where electrodes for the electro-optical influence on the light are connected to all of the $2 \times N$ strip waveguides.

14. Use of a planar waveguide lens as claimed in Claim 13 for signal recognition, characterised in that in N strip waveguides phase shifts of the light emanating from a laser in accordance with a signal which is to be analysed are triggered in a time sequence and in the other N strip waveguides phase shifts in accordance with a reference signal or a series of reference signals are triggered in a time sequence, the interference of the phase-shifted partial waves being checked on a detector.

15. Use of a planar waveguide lens as claimed in Claim 13, for the automatic position recognition of a mask in relation to the substrate with the aid of adjusting marks.

16. Use of a planar waveguide lens as claimed in one of Claims 1 to 12 as a frequency analyzer or as a branch, or as a selective wave-length branch, or as a selective wave-length distributor, or as a switchable branch, or as a switchable distributor, or as a switchable selective wave-length branch, or as a switchable selective wave-length distributor.

17. Use of a planar waveguide lens as claimed 'n Claim 6 as a switchable branch, characterised in that the deflection of the light is carried out by means of an electro-optical Bragg diffraction.

18. Use of a planar waveguide lens as claimed in Claim 2 as a 3 dB-coupler (beam-splitter) for a fibre gyroscope.

19. Use of a planar waveguide lens as claimed in one of Claims 1 to 12 for a data converter.

20. Use of a planar waveguide lens as claimed in Claim 19, characterised in that the items of data are converted from parallel to series mode.

21. Use of a planar waveguide lens as claimed in Claim 19, characterised in that the items of data are converted from series to parallel mode.

22. A method for the production of a planar waveguide lens as claimed in one of Claims 1, 10, 11 or 13, characterised in that the required refractive index profile is achieved by diffusion of a metal layer (e.g. titanium) having a suitable thickness profile into the substrate (e.g. $LiNbO_3$ or $LiTaO_3$).

23. A method for the production of a planar waveguide lens as claimed in Claim 22, characterised in that the thickness profile is determined by a correspondingly formed shadow mask or by a variable time-controlled diaphragm.

24. A method for the production of a planar waveguide lens as claimed in one of Claims 1, 10, 11 or 13, characterised in that the planar waveguide lens is cut out from a conventional, rotationally symmetrical gradient lens, wherein the refraction behaviour varies along the diameter suitably, the axis of the rotationally symmetrical gradient being parallel to the lens axis of the planar waveguide lens.

25. A method for the production of a planar waveguide lens as claimed in Claim 24, characterised in that the cut-out planar waveguide lens is surrounded by a casing material of lower refraction.

**Revendications**

1. Lentille plane à guide d'ondes, dans laquelle le profil de l'indice de réfraction transversalement par rapport à l'axe de la lentille possède une forme approximativement parabolique, caractérisée par au moins une structure en réseau dans la région du trajet du rayon, collimaté pour l'essentiel, en vue de réaliser la subdivision, la déviation ou la réflexion d'au moins un faisceau de lumière traversant la lentille.

2. Lentille plane à guide d'ondes suivant la revendication 1, caractérisée par le fait que la ou les structures en réseau sont permanentes.

3. Lentille plane à guide d'ondes suivant la revendication 2, caractérisée par le fait que la structure en réseau est une structure superficielle en forme de réseau du guide d'ondes.

4. Lentille plane à guide d'ondes suivant la revendication 2, caractérisée par un profil en forme de réseau, obtenu par diffusion pénétrante de l'indice de réfraction.

5. Lentille plane à guide d'ondes suivant la revendication 2, caractérisée par un profil, en forme de réseau, et obtenu par implantation ionique, de l'indice de réfraction.

6. Lentille plane à guide d'ondes suivant la revendication 1, caractérisée par des dispositifs qui produisent par voie électro-optique la ou les structures en réseau.

7. Lentille plane à guide d'ondes suivant la revendication 1, caractérisée par des dispositifs qui produisent par voie acousto-optique la ou les structures en réseau.

8. Lentille plane à guide d'ondes suivant la revendication 7, caractérisée par le fait que, lors du couplage de fibres monomode, la ou les structures en réseau sont produites au moyen d'ondes acoustiques de surface.

9. Lentille plane à guide d'ondes suivant la revendication 7, caractérisée par le fait que lors de couplage de fibres multimodes, la ou les structures en réseau sont produites par l'intermédiaire d'ondes acoustique de volume.

10. Lentille plane à guide d'ondes, dans laquelle le profil de l'indice de réfraction transversalement par rapport à l'axe de la lentille possède une forme approximativement parabolique, caractérisée par des zones de déviation en forme de prismes, produites par voie électro-optique, dans la région du trajet du rayonnement, collimaté pour l'essentiel, pour réaliser la déviation d'au moins un faisceau de lumière traversant la lentille.

11. Lentille plane à guide d'ondes, dans laquelle le profil de l'indice de réfraction transversalement par rapport à l'axe de la lentille possède une forme approximativement parabolique, caractérisée par le fait que le substrat est un substrat électro-optique, auquel cas, au moyen d'électrodes, on peut induire dans une partie de la lentille plane à guide d'ondes, dans la région du trajet du rayonnement collimaté pour l'essentiel, un saut de l'indice de réfraction au niveau duquel alors un faisceau de lumière traversant la lentille ou une partie d'au moins un faisceau de lumière traversant la lentille subit une réflexion totale.

12. Lentille plane à guide d'ondes suivant l'une des revendications 1 à 11, caractérisé par le fait qu'une section de guide d'ondes possédant un indice de réfraction constant est réalisée dans la région des structures en réseau ou des régions déflectrices en forme de prismes ou du saut d'indice de réfraction pouvant être induit.

13. Lentille plane à guide d'ondes, dans laquelle le profil de l'indice de réfraction transversalement par rapport à l'axe de la lentille possède une forme approximativement parabolique, caractérisée par le fait que le substrat est un substrat électro-optique, auquel cas, au centre du corps de la lentille, une région formant guides d'ondes, comportant $2 \times N$ guides d'ondes en forme de bandes, qui possèdent un indice de réfraction constant et qui sont disposés symétriquement par rapport à l'axe de la lentille, est réalisée transversalement par rapport à cet axe, l'ensemble des $2 \times N$ guides d'ondes en forme de bandes étant raccordé optiquement par l'intermédiaire de jonctions coniques aux régions relativement étendues de la lentille à guide d'ondes, qui se raccordent des deux côtés et dans lesquelles le profil de l'indice de réfraction transversalement par rapport à l'axe de la lentille possède une forme approximativement parabolique, tandis que des électrodes servant à influencer la lumière par voie électro-optique sont disposées sur l'ensemble de ces $2 \times N$ guides d'ondes en forme de bandes.

14. Utilisation de la lentille plane à guide d'ondes selon la revendication 13 pour l'identification de signaux, caractérisée par le fait que des déphasages de la lumière sortant d'un laser sont provoqués, dans N guides d'ondes en forme de bandes, conformément à un signal à analyser et que des déphasages sont provoqués dans les autres N guides d'ondes en forme de bandes conformément à un signal de référence ou à une série de signaux de référence, selon une succession dans le temps, auquel cas l'interférence des ondes partielles déphasées est contrôlée au niveau d'un détecteur.

15. Application de la lentille à guide d'ondes selon la revendication 13 pour l'identification automatique de la position d'un masque par rapport au substrat à l'aide de marques d'ajustement.

16. Application de la lentille plane à guide d'ondes suivant l'une des revendications 1 à 12 en tant qu'analyseur de fréquences ou branche de dérivation ou branche de dérivation sélective du point de vue des longueurs d'ondes ou répartiteur sélectif du point de vue des longueurs d'ondes ou branche de dérivation commutable ou répartiteur commutable ou branche de dérivation commutable et sélective du point de vue des longueurs d'ondes ou comme répartiteur commutable sélectif du point de vue des longueurs d'ondes.

17. Application de la lentille plane à guide d'ondes suivant la revendication 6 en tant que branche de dérivation commutable, caractérisée par le fait que la déviation de la lumière est réalisée par l'intermédiaire d'un déflecteur électro-optique de Bragg.

18. Application de la lentille plane à guide d'ondes suivant la revendication 2, en tant que coupleur à 3 dB (diviseur de rayonnement) pour un gyroscope à fibres.

19. Application de la lentille plane à guide d'ondes suivant l'une des revendications 1 à 12 pour un convertisseur de données.

20. Application de la lentille plane à guide d'ondes suivant la revendication 19, caractérisée par le fait que les données sont converties du mode parallèle au mode série.

21. Application de la lentille plane à guide d'ondes suivant la revendication 19, caractérisée par le fait que les données sont converties du mode série au mode parallèle.

22. Procédé pour fabriquer la lentille plane à guide d'ondes suivant l'une des revendications 1, 10, 11, 13, caractérisé par le fait qu'on réalise le profil désiré de l'indice de réfraction par diffusion pénétrante d'une couche métallique (par exemple du titane) qui possède un profil correspondant de son épaisseur, dans le substrat (par exemple du $LiNbO_3$ ou $LiTaO_3$).

23. Procédé pour fabriquer la lentille plane à guide d'ondes suivant la revendication 22, caractérisé par le fait que le profil d'épaisseur est fixé par un masque d'ombre conformé de façon correspondante ou bien par un diaphragme variable commandé dans le temps.

24. Procédé pour fabriquer la lentille à guide d'onde suivant l'une des revendications 1, 10, 11, 13, caractérisé par le fait qu'on obtient la lentille plane à guide d'ondes par découpage dans une lentille à gradient usuelle à symétrie de révolution et dans laquelle le comportement de réfraction varie de façon correspondante sur le diamètre, l'axe de la lentille à gradient à symétrie de révolution étant parallèle à l'axe de la lentille plane à guide d'ondes.

25. Procédé pour fabriquer une lentille plane à guide d'ondes suivant la revendication 24, caractérisé par le fait que l'on enveloppe la lentille plane à guide d'ondes obtenue par découpage, par un matériau enveloppe possédant un indice de réfraction inférieur.

FIG 1

FIG 2

# FIG 3

# FIG 4

# FIG 5

a

b

# FIG 6

# FIG 7

# FIG 8

# FIG 9

0 042 514

FIG 10

FIG 11

17